# EUROPEAN PATENT APPLICATION

(11) **EP 1 806 671 A2**
(43) Date of publication of application: **11.07.2007**
(21) Application number: 06015903.5
(22) Date of filing: 31.07.2006
(51) Int. Cl.: G06F 21/00

(54) **Digital Rights Management in an information terminal**

(30) Priority: 30.11.2005 JP 2005346647
(71) Applicant: KABUSHIKI KAISHA TOSHIBA, Tokyo (JP)
(72) Inventor: Watanabe, Keiko, c/o intellectual Property Div., Tokyo 105-8001 (JP); Sato, Jun, c/o Int. Prop. Div. Toshiba Corp., Tokyo 105-8001 (JP); Terauchi, Toru, c/o Int. Prop. Div. Toshiba Corp., Tokyo 105-8001 (JP)
(74) Representative: HOFFMANN EITLE

(57) **Abstract**

In a first terminal (TA) serving as rights assignment source, an encoding binding state of a key encoding key included in a rights object is converted from a bind using a binding key (K_{A}) of the first terminal (TA) and a bind using a domain key (K_{D}).
Then, the rights object including the thus bound converted key encoding key is transferred to a second terminal (TB) serving as rights assignment destination together with encoded content, and further, the above domain key (K_{D}) is transferred to the second terminal(TB) via a secure session.

## Description

The present invention relates to an information terminal that enables sharing, transfer, or dividing the rights to content acquired from a content server, for example.

In recent years, there has been prevalent a distribution service for downloading rich content such as audio content from a content server to an information terminal such as a mobile terminal, a cellular phone, or a personal computer. In the information terminal utilizing this kind of service, the downloaded content is temporarily stored in a memory, and the stored content is read and played from the memory in response to a user's playing back operation.

In some cases, rights information for protecting a copyrights or the like is assigned to content. The kind of content is encoded and stored, and, at the time of playback, the encoded content is decoded and played under a condition specified by the rights information. The playback condition includes, for example, playback count or a playback period. As an encoding system, there is used a system of encoding content by a content key made of random numbers and encoding the content key by a key encoding key, and further, encoding the key encoding key by a binding key. For example, specific identification information of a terminal is used as the binding key. By using such an encoding system, content is obtained in a terminal bound state, whereby playback of content can be limited to an information terminal having the content encoded therein.

In the meantime, recently, there have been proposed a variety of terminals for sharing the rights of the acquired content with another person and transferring or dividing and assigning the rights to such person. For example, techniques for transferring rights include: transferring content bound by specific identification information of a terminal from the terminal to another terminal and transferring the specific identification information via a secure transmission channel, thereby enabling use of the specific identification information by means of a terminal serving as a transfer destination after transferring and disabling use of the specific identification information by the terminal serving as a transfer source (refer to Jpn. Pat. Appln. KOKAI Publication No. 2003-303137, for example).

There has been proposed another technique of providing a server for managing use of rights, and sharing the rights between terminals via the server.

However, the technique disclosed in Jpn. Pat. Appln. KOKAI Publication No. 2003-303137 disables use of specific identification information by a terminal serving as a transfer source with transfer of the rights of content. In the terminal serving as the transfer source as well, there is a problem that a change of the specific identification information is unavoidable. On the other hand, in the case where all the procedures for assigning rights are done via a server, a terminal must provide access to the server every time. For this reason, there is a problem that such a terminal is limited to a terminal having an access function.

The present invention has been made in view of the above-described circumstances. It is an object of the present invention to provide an information terminal that eliminates change of terminal specific identification information and enables execution of procedures relevant to assignment of rights between terminals without the intervention of a server.

According to a first aspect of the present invention, there is provided an information terminal to be used as a first terminal in a system for transferring an encoded contents and a rights object including, rights information on the encoded content, and an encoding key, the encoding key being encoded based on specific identification information of the first terminal, from the first terminal to a second terminal.

In the information terminal the rights object encoded based on the specific identification information of the first terminal is re-encoded on the basis of a domain key obtained in advance. Then, the encoded content and the re-encoded rights object are transferred to the second terminal, and the domain key is transferred to the second terminal via a secure session.

According to a second aspect of the present invention, specific identification information of a second terminal is acquired from the second terminal via a secure session, and then, a rights object encoded based on the specific identification information of the first terminal is re-encoded on the basis of the acquired specific identification information of the second terminal. The re-encoded rights object is transferred to the second terminal together with the encoded content.

According to a third aspect of the present invention, there is provided an information terminal to be used as a second terminal in a system for transferring a rights object including encoded content, rights information on the encoded content, and an encoding key, the rights object being encoded based on specific identification information of a first terminal, from the first terminal to the second terminal.

In the information terminal, the encoded content is acquired from the first terminal, and a decoded rights object is acquired from the first terminal via a secure session. Then, the acquired rights object is re-encoded on the basis of the specific identification information of the second terminal.

According to a fourth aspect of the present invention, encoded content and a rights object encoded based on specific identification information of a first terminal are respectively acquired from the first terminal, and the specific identification information of the first terminal is acquired via a secure session. The acquired encoded rights object is decoded on the basis of the acquired specific identification information of the first terminal, and then, is re-encoded on the basis of the specific identification information of the second terminal.

The invention can be more fully understood from the following detailed description when taken in conjunction with the accompanying drawings, in which:
FIG. 1 is a schematic diagram of a system according to a first embodiment of the present invention;
FIG. 2 is a functional block diagram of an information terminal according to the first embodiment of the present invention;
FIG. 3 is a diagram for explaining rights assignment processing operation using the information terminal shown in FIG. 2;
FIG. 4 is a flow chart showing the procedures for, and the contents of, the rights assignment processing operation using the information terminal shown in FIG. 2;
FIG. 5 is a diagram showing a first example of formats of encoded contents and a rights object generated in the information terminal shown in FIG. 2;
FIG. 6 is a view showing an example of a process for converting a rights object with copy or move of a right, the converting process being executed in the information terminal shown in FIG. 2.
FIG. 7 is a diagram showing an example of a process for converting a rights object with division of a right, the converting process being executed in the information terminal shown in FIG. 2.
FIG. 8 is a diagram for explaining rights assignment processing operation according to a second embodiment of the present invention;
FIG. 9 is a diagram for explaining rights assignment processing operation according to a third embodiment of the present invention;
FIG. 10 is a diagram for explaining rights assignment processing operation according to a fourth embodiment of the present invention; and
FIG. 11 is a diagram showing a second example of formats of encoded contents and a rights object generated in the information terminal shown in FIG. 2.

### (First embodiment)

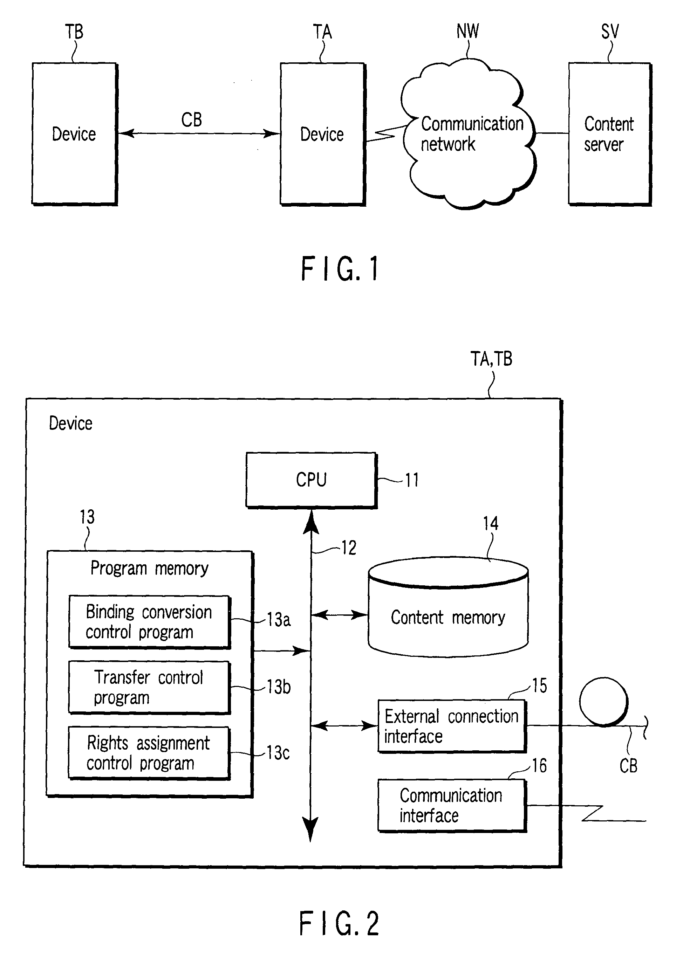

FIG. 1 is a schematic diagram of a content management system including an information terminal according to a first embodiment of the present invention, wherein TA denotes a first terminal. The first terminal TA is configured by, for example, a mobile terminal, a cellular phone, or a personal computer, which enables an access to a content server SV via a communication network NW. The first terminal downloads desired contents from the content server SV, and stores the downloaded contents in a memory such as a hard disk. The communication network NW is composed of, for example, an Internet protocol (IP) network represented by the Internet and a plurality of access networks for providing an access to the IP network. As the access network, there is employed a wired subscriber network using a digital subscriber line (DSL) or an optical transmission channel; a wireless local area network (LAN); and a mobile communication network.

Further, the first terminal TA can be connected to a second terminal TB via a signal cable CB such as a universal serial bus (USB) cable. The second terminal TB is also configured by a mobile terminal, a cellular phone, or a personal computer. The present embodiment describes an example of transferring contents with rights from the first terminal TA to the second terminal TB.

FIG. 2 is a block diagram depicting functional components of the first terminal TA. In the figure, a program memory 13 and a content memory 14 are connected to a central processing unit (CPU) 11 via a bus 12, and further, an external connection interface 15 and a communication interface 16 are connected thereto, respectively.

The content memory 14 uses, for example, a hard disk, and stores contents with rights downloaded from the content server SV. At the time of this storage, the contents with rights are encoded after divided into contents and rights objects, respectively. The encoding format will be described later in detail.

The external connection interface 15 comprises, for example, a USB interface function, and transfers encoded contents or the like to the second terminal TB via the signal cable UC. The communication interface 16 makes communication for downloading contents with the content server SV in accordance with a communication protocol specified by the communication network NW.

The first terminal TA is also provided with: an input interface to which input units such as a keypad or a mouse are connected; and a display interface to which a display unit such as an LCD display is connected.

The program memory 13 is composed of a nonvolatile memory such as a hard disk or a ROM. The program memory 13 stores a bonding conversion control program 13a, a transfer control program 13b, and rights assignment control program 13c, as application programs according to the present invention.

The binding conversion control program 13a causes the CPU 11 to execute the following processing. That is, when contents with rights are assigned to the second terminal TB, an encoding binding state of a rights object (RO) is converted from a device bind employing specific identification information of the first terminal TA to a domain bind employing a domain key. The domain key is stored in a state in which it is confidentially handled in the first terminal TA.

The transfer control program 13b causes the CPU 11 to execute the following processing. That is, encoded contents EC and the encoded rights objects RO subjected to binding conversion are transferred to the second terminal TB via the signal cable CB. In addition, a secure session is established with respect to the second terminal TB, and the above domain key is transferred to the second terminal TB via this secure session.

The rights transfer control program 13c causes the CPU 11 to execute the following processing. That is, when the contents with rights are assigned and transferred, it is first determined whether type of assignment is a share or transfer or a division. In the case where the type is a share or a transfer, the encoded contents EC and the encoded rights object RO subjected to binding conversion are transferred intact to the second terminal. On the other hand, in the case of division, rights information contained in the rights object RO is divided into a plurality in accordance with its contents to generate rights objects ROD1 and ROD2 for each of the plural items of the thus divided rights information. In addition, one of the thus generated rights objects ROD1 and ROD2 is transferred to the second terminal TB together with the encoded contents EC.

Now, an operation of the above-configured first terminal TA will be described here.

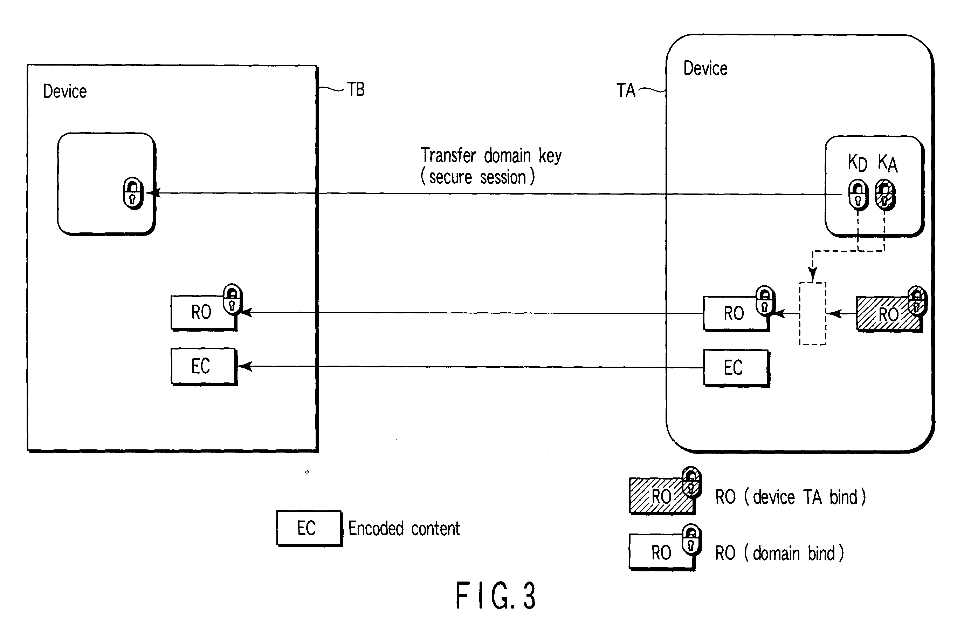

First, a description will be given with respect to an outline of an operation for assigning contents with rights from the first terminal TA to the second terminal TB. FIG. 3 is a diagram showing an outline of the assignment processing operation.

The first terminal TA first converts a rights object RO encoded and bound employing the specific identification information of the first terminal to a domain bind employing the domain key stored in a state in which it is confidentially handled in the first terminal TA. The binding conversion is carried out by decoding the encoded rights object RO by a binding key of the first terminal TA, and re-encoding the decoded rights object RO by the domain key. Then, the first terminal transfers the rights object RO re-encoded by the above domain key to the second terminal TB together with the encoded contents, and stores them therein. In addition, the first terminal TA establishes a secure session with respect to the second terminals TB, transfers the above domain key to the second terminal TB via this secure session, and stores it therein.

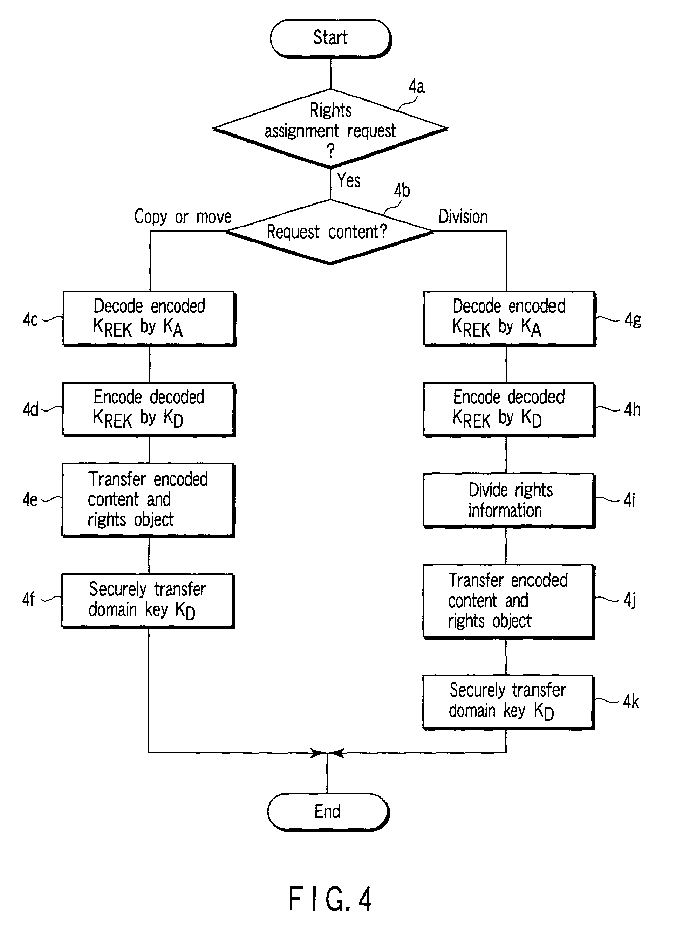

Now, a processing operation for assigning contents with rights will be described in more detail. FIG. 4 is a flow chart showing procedures for, and processing contents of, the rights assignment processing in the first terminal TA.

### (1) Downloading and storing contents

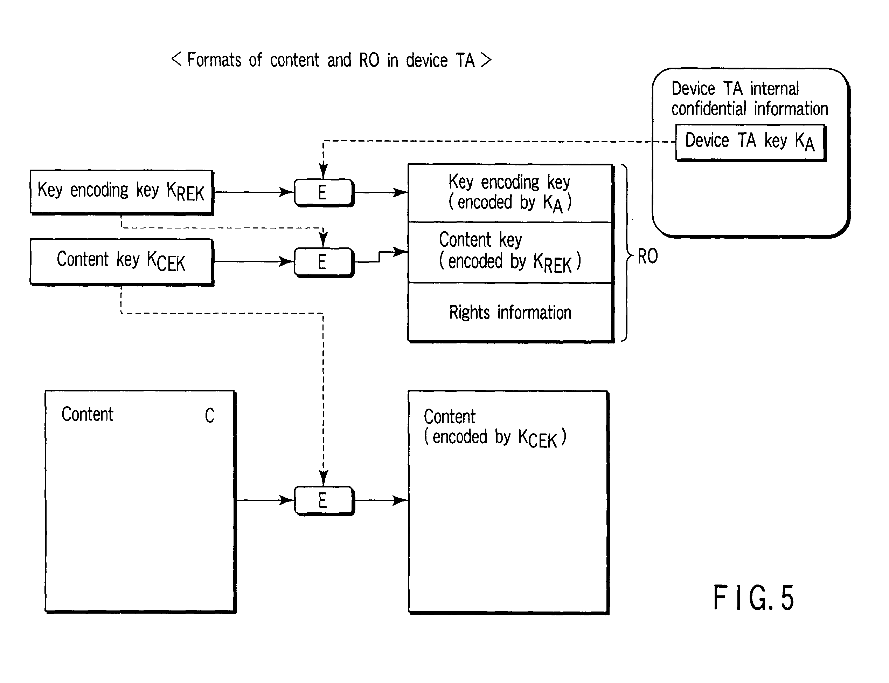

The first terminal TA provides an access to a content server SV via a communication network NW, and downloads desired contents C from the content server SV. In the case where rights have been assigned to the downloaded contents C, the downloaded contents C are encoded by a content key CEK as shown in, for example, FIG. 5, and the thus encoded contents EC are stored in the content memory 14. The content key CEK is generated based on, for example, random numbers.

Next, the first terminal TA encodes the content key KCEK by a key encoding key KREK, and then, encodes the key encoding key KREK by a first device key KA. The key encoding key KREK is generated based on random numbers. As a first device key KA, a public key of the first terminal TA is employed for the purpose of encoding, and on the other hand, a secret key is employed for the purpose of decoding, respectively.

The first terminal TA configures an encoded rights object RO by means of the content rights information, the content key KCEK encoded by the key encoding key KREK, and the key encoding key KREK encoded by the first device key KA. The thus encoded rights object RO is stored in the content memory 14 so as to be associated with the encoded contents EC.

### (2) Sharing or transferring contents with rights (copy or move)

For example, if rights is requested from the second terminal TB, the first terminal TA moves from step 4a to step 4b, as shown in FIG. 4. In this step 4a, it is determined that assignment type is a copy or move, or alternatively, a division.

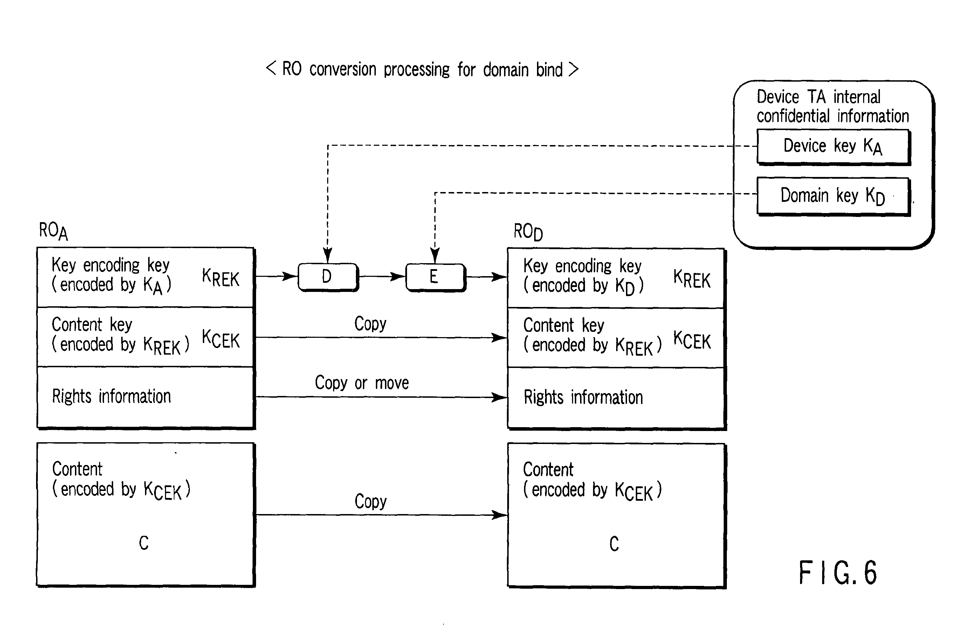

It is assumed that, as a result of the determination, the required rights assignment type is a copy or move. In this case, the first terminal TA first moves to step 4c in which, for example, as shown in FIG. 6, the encoded key encoding key KREK is decoded by a binding key KA (secret key) of the first terminal TA. Subsequently, in step 4d, the decoded key encoding key KREK is encoded by a domain key KD stored in a confidentially handled state, as shown in FIG. 6. Then, an assignment rights object ROD is reconfigured by means of the re-encoded key encoding key KREK, the above rights information and content key KCEK.

Next, in step 4e, the first terminal TA transfers the encoded contents EC stored in the content memory 14 and the reconfigured assignment rights object ROD to the second terminal TB via the cable CB. In addition, in step 4f, a secure session is established with respect to the second terminal TB. In this secure session, for example, a public key system is used. That is, mutual authentication is carried out between the first terminal TA and the second terminal TB. Only in the case where validity of the second terminal TA has been checked, the session is established. Then, the public key is exchanged between the first terminal TA and the second terminal TB, and the domain key KD is encoded by a public key of a counterpart terminal to be transferred.

### (3) Divisional assignment of contents with rights

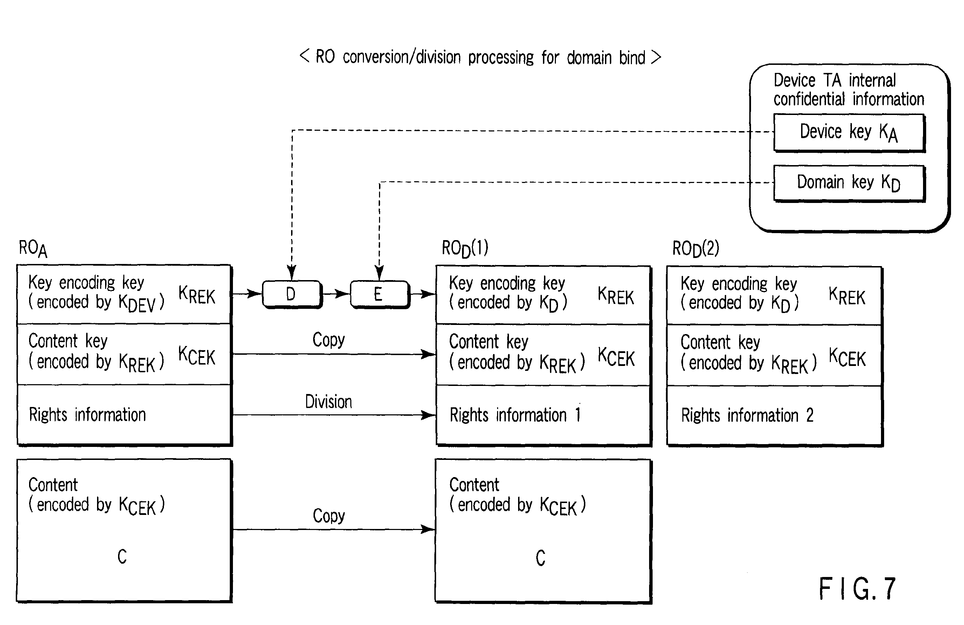

It is assumed that, as a result of the determination in step 4b, requested assignment type is a division. In this case, the first terminal TA first moves to step 4g, in which, for example, as shown in FIG. 7, the encoded key encoding key KREK is decoded by the binding key KA of the first terminal TA. Subsequently, in step 4h, the decoded key encoding key KREK is encoded by means of the domain key KD stored in a state in which it is confidentially handled, as shown in FIG. 7.

In addition, in step 4i, rights information is divided into a plurality of rights information (two items of information in this case) in accordance with its contents. In the case where, as shown in, for example, FIG. 7, playback count is set to 5 in rights information, the playback count is divided into three and two times. Then, for each of the divided items of rights information, assignment rights objects ROD(1) and ROD(2) are reconfigured by means of the rights information, the re-encoded key encoding key KREK and the content key KCEK.

Next, in step 4j, the first terminal TA transfers the encoded contents EC stored in the content memory 14 and one of the reconfigured assignment rights objects ROD(1) and ROD(2) to the second terminal TB via the signal cable CB. In addition, in step 4k, a secure session is established with respect to the second terminal TB. When the secure session is established, the domain key KD is transferred to the second terminal TB via this secure session.

The first terminal TA uses itself the other one of the reconfigured assignment rights objects ROD(1) and ROD(2). However, the other one of the rights objects ROD(1) and ROD(2) may be transferred to a third terminal (not shown) together with the encoded contents EC, without being limited thereto.

As described above, according to the first embodiment, the first terminal TA serving as rights assignment source converts an encoding binding state of a key encoding key KREK included in a rights object RO from a bind using the binding key KA of the first terminal TA to a bind using the domain key KD. Then, the rights object RO including the bound converted key encoding key KREK is transferred to the second terminal TB serving as rights assignment destination together with the encoded contents EC. Further, the above domain key KD is transferred to the second terminal TB via a secure session.

Therefore, there is no need for the first and second terminals TA and TB to change specific identification information. In addition, a process relevant to rights assignment can be directly carried out between the first and second terminals TA and TB without intervening rights server. For this reason, there is no need for providing an access to the rights server every time rights assignment occurs, thereby making it possible to carry out rights assignment processing between terminals, each of which does not have a communication function as well.

### (Second embodiment)

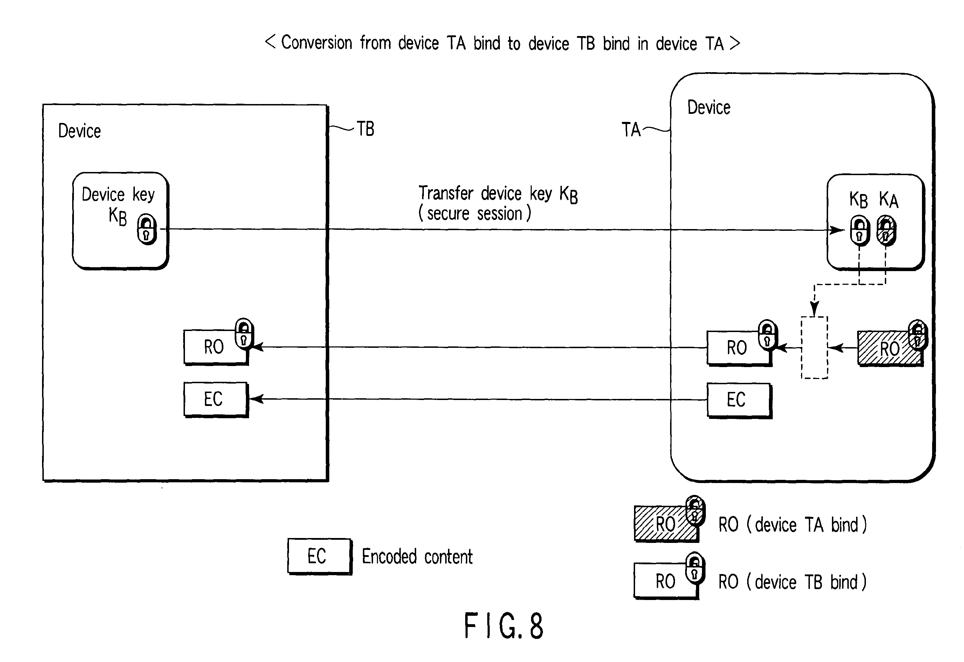

FIG. 8 is a sequence diagram for explaining rights assignment processing operation using an information terminal according to a second embodiment of the present invention. Also in the present embodiment, a configuration of a first terminal TA will be described with reference to FIG. 2.

In the first terminal TA, encoded contents EC and a rights object RO are stored in a content memory 14 so as to be associated with each other, as shown in FIG. 5. The rights object RO is composed of rights information on contents C, a content key KCEK encoded by a key encoding key REK, and the key encoding key KREK encoded by a device key KA of the first terminal TA.

If a request for assigning contents with rights is sent from, for example, a second terminal TB with the first terminal TA and the second terminal TB connected to each other via a signal cable CB, the first terminal TA first establishes a secure session with respect to the second terminal TB. Then, the first terminal TA acquires a device key KB of the second terminal TB from the second terminal TB via this secure session.

Next, the first terminal TA decodes a key encoding key KREK included in the rights object RO of contents with rights targeted for assignment by means of a binding key KA of the first terminal TA. The thus decoded key encoding key KREK is re-encoded by the acquired device key KB of the second terminal TB. As a consequence, a bound state of the rights object is converted from a state in which the object is bound by the first terminal TA serving as rights assignment source to a state in which the object is bound by the second terminal TB serving as rights assignment destination.

Subsequently, the first terminal TA transfers the encoded contents EC to the second terminal TB via the signal cable CB together with the bound converted rights object ROB, and stores them therein.

In the present embodiment as well, as in the first embodiment, it is determined whether a requested rights assignment type is a copy or move or a division, prior to a binding converting process. If the requested type is a copy or move, the encoded contents and the bound converted rights object are transferred intact to the second terminal TB, as shown in FIG. 6.

In contrast, if the requested rights assignment type is a division, rights information is divided into a plurality of rights information, as shown in FIG. 7. For each of the divided items of rights information, assignment rights objects ROD(1) and ROD(2) are reconfigured by the re-encoded key encoding key RREK and the content key KCEK. One of the thus configured assignment rights objects ROD(1) and ROD(2) is transferred from the first terminal TA to the second terminal TB together with the encoded contents EC.

As described above, according to the second embodiment, the first terminal TA serving as rights assignment source acquires a bonding key KB of the second terminal TB from the second terminal TB serving as rights assignment destination via a secure session. Using the thus acquired binding key KB of the second terminal TB, a bound state of the rights object RO is converted into a state in which the object is bound with the first terminal TA to a state in which the object is bound with the second terminal TB. Then, the thus converted encoding rights object is transferred to the second terminal TB together with the encoded contents EC, and they are stored therein.

Therefore, as in the first embodiment, there is no need for the first and second terminals TA and TB to change specific identification information. Further, it becomes possible to directly carry out a processing operation relevant to rights assignment between the first and second terminals TA and TB without intervening rights server.

### (Third embodiment)

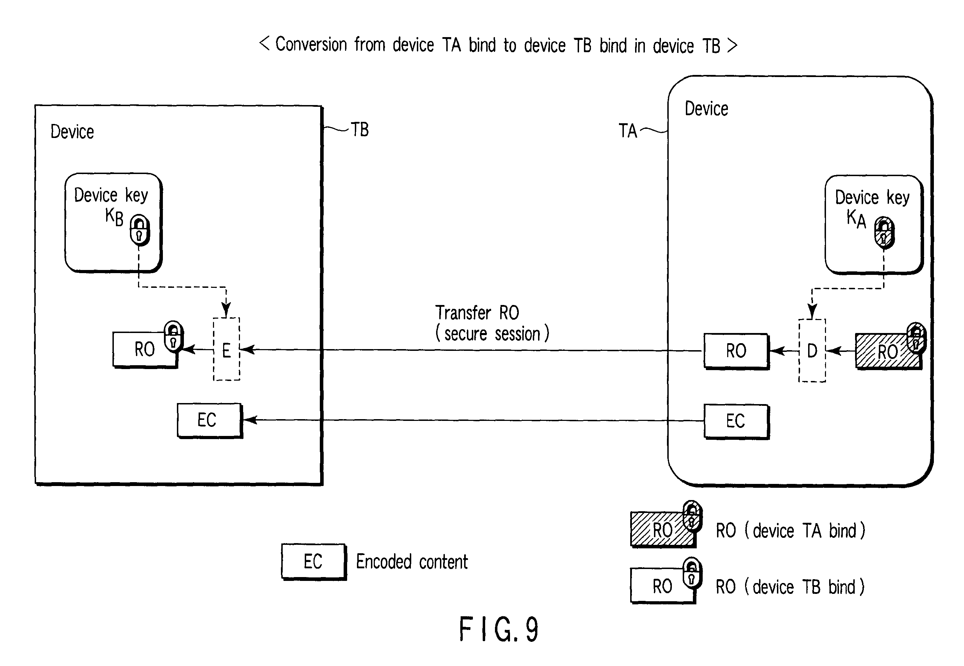

FIG. 9 is a sequence diagram for explaining rights assignment processing operation using an information terminal according to a third embodiment of the present invention. In the present embodiment, a configuration of a second terminal TB is basically identical to that of the first terminal TA shown in FIG. 2, and a description will be given with reference to FIG. 2.

In the first terminal TA, encoded contents EC and a rights object RO are stored in a content memory 14 so as to be associated with each other, as shown in FIG. 5. The rights object RO is composed of rights information on contents C, a content key KCEK encoded by a key encoding key KREK, and the key encoding key KREK encoded by a device key KA of the first terminal TA.

Assume that a request for assigning contents with rights are sent from, for example, the second terminal TB with the first terminal TA and the second terminal TB connected to each other via a signal cable CB. In this case, the first terminal TA first decodes the key encoding key KREK included in the rights object RO by means of a binding key KA of its own. Next, the encoded contents EC are transferred intact to the second terminal TB. Then, the first terminal TA establishes a secure session with respect to the second terminal TB, and transfers the decoded rights object RO to the second terminal TB via this secure session.

In contrast, the second terminal TB stores the transferred encoded contents EC in the content memory 14. In addition, the key encoding key KREK included in the rights object RO transferred from the first terminal TA via the secure session is re-encoded by using a device key KB of the second terminal TB. Then, the rights object RO including the thus re-encoded key encoding key KREK is stored in the content memory 14 so as to be associated with the encoded contents EC.

Also in the third embodiment, as in the first embodiment, it is determined whether a requested rights assignment type is a copy or move or a division, prior to the binding converting processing. Then, transfer processing for copying or moving a rights object in response to a result of the determination or processing for dividing and transferring rights information is selectively executed. At this time, rights information dividing processing and processing for reconfiguring a rights object for each of the divided rights information are carried out in the first terminal TA serving as rights assignment source.

As described above, in the third embodiment, at the time of assigning rights of contents, the first terminal TA decodes the rights object RO bound by the binding key KA of the first terminal TA, and then, transfers the thus decoded rights object RO to the second terminal TB serving as rights assignment destination via a secure session. The second terminal TB binds, converts, and stores the rights object RO transferred from the first terminal TA by re-encoding it by using the key KB of the second terminal TB.

Consequently, as in the first and second embodiments, there is no need for the first and second terminals TA and TB to change specific identification information. Further, it becomes possible to directly carry out a processing operation relevant to rights assignment between the first and second terminals TA and TB without intervening rights server.

### (Fourth embodiment)

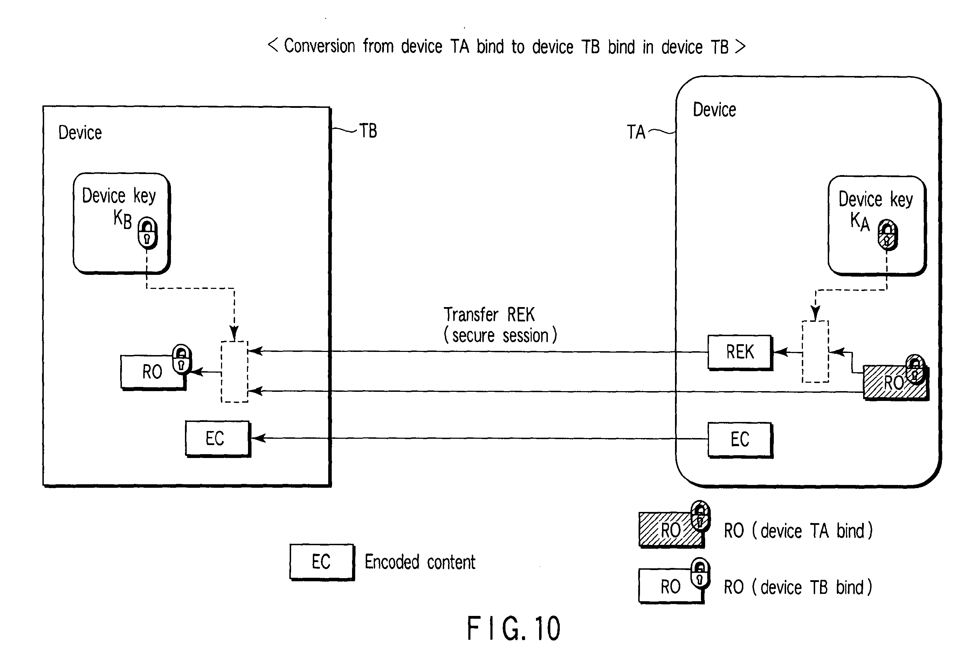

FIG. 10 is a sequence diagram for explaining rights assignment processing operation using an information terminal according to a fourth embodiment of the present invention. In the present embodiment as well, a configuration of a second terminal TB is basically identical to that of the first terminal TA shown in FIG. 2, and a description will be given with reference to FIG. 2.

In the first terminal TA, encoded contents EC and a rights object RO are stored in a content memory 14 so as to be associated with each other, as shown in FIG. 5. The rights object RO is composed of rights information on contents C, a content key KCEK encoded by a key encoding key KREK, and the key encoding key KREK encoded by a device key KA of the first terminal TA.

With the first terminal TA and the second terminal TB connected to each other via a signal cable CB, if a request for assigning contents with rights are sent from, for example, the second terminal TB, the first terminal TA first calculates a key encoding key REK from the rights object RO bound by a binding key KA of the first terminal TA.

Next, the first terminal TA transfers the encoded contents EC and the rights object RO bound by the binding key KA to the second terminal TB serving as rights assignment destination via the signal cable CB. In addition, a secure session is established between the first terminal TA and the second terminal TB, and the calculated key encoding key REK is transferred to the second terminal TB serving as rights assignment destination via this secure session.

The second terminal TB generates a rights object RO bound by a binding key KB of the second terminal TB on the basis of the key encoding key REK transferred from the first terminal TA and the rights object RO bound by the binding key KA. Then, the thus generated rights object RO bound by the binding key KB is stored in the content memory 14 so as to be associated with the encoded contents EC transferred from the first terminal TA.

In the fourth embodiment as well, as in the first embodiment, it is determined whether a requested rights assignment type is a copy or move or a division, prior to a binding converting process. In response of a result of the determination, transfer processing for copying or moving a rights object or processing for dividing and transferring rights information is selectively executed. At this time, rights information dividing processing and processing for reconfiguring a rights object for each of the divided items of rights information are carried out in the first terminal TA serving as rights assignment source.

As described above, in the fourth embodiment, the encoded contents EC and the rights object RO bound by the binding key KA are transferred, respectively, from the first terminal TA serving as rights assignment source to the second terminal serving as rights assignment destination. In addition, in the first terminal TA, the key encoding key REK is calculated from the rights object bound by means of the binding key KA of the first terminal TA, and the thus calculated key encoding key REK is securely transferred to the second terminal TB serving as rights assignment destination. In the second terminal TB, the rights object RO bound by the binding key KB of the second terminal TB is generated and stored on the basis of the key encoding key REK transferred from the first terminal TA and the rights object bound by the above binding key KA.

Therefore, as in the first to third embodiments, there is no need for the first and second terminals TA and TB to change specific identification information. Further, it becomes possible to directly carry out a processing operation relevant to rights assignment between the first and second terminals TA and TB without intervening rights server.

Further, the key encoding key REK calculated from the rights object RO is securely transferred from the first terminal TA to the second terminal TB. As a result, an amount of transfer data can be reduced as compared with a case of securing transferring the binding key KA of the first terminal TA. In this manner, a time interval required for rights assignment can be reduced.

### (Another embodiment)

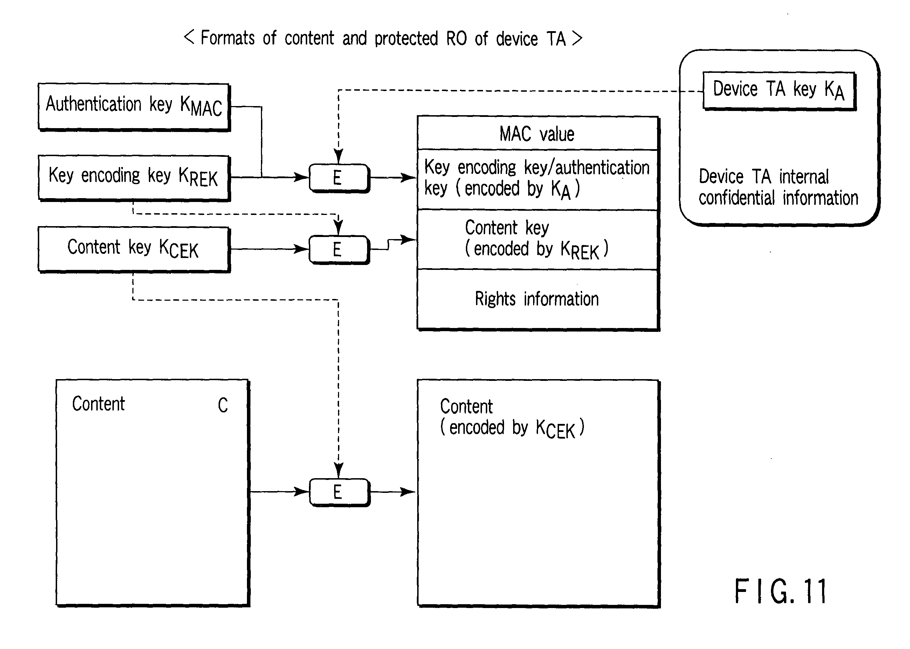

When a rights object RO is encoded and stored in a first terminal TA, a message authentication cord (MAC) value is preferably included in the rights object RO. For example, as shown in FIG. 11, the MAC value is calculated on the basis of rights information, an encoded content key KCEK, and key information. The key information is obtained in such a manner that the key encoding key KREK for encoding the content key KCEK and an authentication key KMAC are encoded by a binding key KA of the first terminal TA. Then, with respect to the above calculated MAC value, a rights object RO is composed of the rights information, the encoded content key KCEK, and the key information. By doping this, a MAC value of a portion excluding a MAC value of the rights object RO is calculated using the authentication key KMAC, and it is determined whether or not the thus calculated value coincides with the MAC value added to the rights object RO, whereby the presence or absence of falsification of the rights object can be authenticated.

In the first embodiment, the upper limit value of transfer destination count of a domain key KD is registered in advance in the first terminal TA, and when a secure session is established, an accumulation value of transfer count is compared with the upper limit value. Then, in the case where the accumulation value has exceeded the upper limit value, subsequent transfer of the domain key KD may be disabled. By doing this, the transfer count of contents with rights can be limited.

In addition, the upper limit value of transfer destination count of a binding key KA of a first terminal TA is registered in advance in the first terminal TA, and when a secure session is established, an accumulation value of transfer count is compared with the upper limit value. Then, in the case where the accumulation value exceeds the upper limit value, subsequent transfer of the domain key KA may be disabled. This makes it possible to limit the device count of the rights assignment destination.

In the fourth embodiment, the key encoding key REK calculated from the rights object RO is transferred via a secure session. However, the binding key KA of the first terminal TA may be transferred intact via a secure session. By doing this, there is no need for calculating the key encoding key REK in the first terminal TA, and concurrently, a processing burden on the first terminal TA can be reduced. This advantageous effect is effective in particular in the case of using a mobile terminal, such as a cellular phone, that is inferior to a personal computer or the like in calculation processing capability, as the first terminal.

Further, a variety of aspects of assignment processing of rights information are assumed in accordance with contents of rights information. A first aspect is to manage the number of terminals that can be shared in the first terminal TA. In this aspect, the number of terminals that share rights in the first terminal TA is counted. Then, this count value is compared with the upper limit value of the number of terminals specified in accordance with rights information, and if the count value reaches the upper limit value, the subsequent sharing is limited, thereby making it possible to achieve the above management.

According to a second embodiment, copy and move operations are executed separately. In this case, "Stateful" information is not shared in the copy operation, and the "Stateful" information is shared in the move operation. The "Stateful" information indicates the contents of rights required to manage a change state like specifying playback count.

According to a third aspect, a binding key is specified based on rights information. For example, in the case where a subscriber ID, a telephone number, and the like registered in a subscriber identity module (SIM) of the first terminal TA is specified in accordance with rights information, the binding key is generated based on the subscriber ID, and the binding key is used.

Various modifications can occur without departing from the spirit of the present invention with respect to types and configurations of first and second terminals, data transfer means from the first terminal to the second terminal (wireless terminal may be used without being limited to signal cable); procedures for, and contents of, processing for binding and converting a rights object; procedures for, and processing contents of, transferring encoded contents and a rights object.

In short, the present invention is not limited to the above-described embodiments. At the stage of carrying out the invention, the present invention can be embodied by modifying constituent elements without deviating from the spirit of the invention. In addition, a variety of inventions can be formed by using a proper combination of a plurality of constituent elements disclosed in the above-described embodiments. For example, some constituent elements may be eliminated from all the constituent elements disclosed in the embodiments. Further, the constituent elements according to different embodiments may be properly combined with each other.

## Claims

1. An information terminal to be used as a first terminal (TA) in a system for transferring an encoded content and a rights object including, rights information on the encoded content and encoding key information, the encoding key information being encoded based on specific identification information of the first terminal (TA), from the first terminal (TA) to a second terminal (TB), the information terminal **characterized by** comprising:
means (13a, 4d) for re-encoding the rights object on the basis of a domain key;
first transfer means (13b, 4e) for transferring the encoded contents and the re-encoded rights object to the second terminal (TB); and
second transfer means (13b, 4f) for transferring the domain key to the second terminal (TB) via a secure session.

2. The information terminal according to claim 1, **characterized in that** the first transfer means (13b, 4e) comprises:
means (4e) for, when rights copy or move is requested, transferring the rights information including the re-encoded rights object; and
means (4i, 4j) for, when rights division is requested, dividing the rights information into a plurality of rights information, generating a re-encoded rights object for each of divided rights information, and selectively transferring the plurality of generated re-encoded rights objects.

3. The information terminal according to claim 1, **characterized by** further comprising:
means (13c) for calculating a message authentication cord (MAC) value on the basis of the rights information, an encoded content key and a key information obtained by encoding a key encoding key and an authentication key in accordance with the specific identification information of the first terminal (TA), and including the calculated MAC value in the rights object.

4. An information terminal to be used as a first terminal (TA) in a system for transferring an encoded content and a rights object including rights information on the encoded content and encoding key information, the encoding key information being encoded based on specific identification information of the first terminal, from the first terminal (TA) to a second terminal (TB), the information terminal **characterized by** comprising:
means (13a) for acquiring specific identification information (K_{B}) of the second terminal (TB) from the second terminal (TB) via a secure session;
means (13a) for re-encoding a rights object on the basis of the acquired specific identification information (K_{B}) of the second terminal (TB); and
first transfer means (13b) for transferring the encoded contents and the encoded rights object to the second terminal (TB).

5. The information terminal according to claim 4, **characterized in that** the first transfer means (13b) comprises:
means (13c) for, when a rights copy or move is requested, transferring the rights information including the re-encoded rights object; and
means (13c) for, when rights division is requested, dividing the rights information into a plurality of rights information, generating a re-encoded rights object for each of divided rights information, and selectively transferring the plurality of generated re-encoded rights object.

6. The information terminal according to claim 4, **characterized by** further comprising:
means (13c) for calculating a message authentication cord (MAC) value on the basis of rights information, an encoded content key and key information obtained by encoding a key encoding key, and an authentication key in accordance with the specific identification information of the first terminal (TA), and including the calculated MAC value in the rights object.

7. An information terminal to be used as a second terminal (TB) in a system for transferring an encoded content and a rights object including rights information on the encoded content and encoding key information, the encoding key information being encoded based on specific identification information of a first terminal (TA), from the first terminal (TA) to the second terminal (TB), the information terminal **characterized by** comprising:
first acquisition means (13a) for acquiring the encoded content from the first terminal (TA);
second acquisition means(13a) for acquiring a decoded rights object from the first terminal (TA) via a secure session; and
means (13a) for re-encoding the acquired decoded rights object on the basis of specific identification information of the second terminal (TB).

8. The information terminal according to claim 7, **characterized by** further comprising:
means (13c) for calculating a message authentication cord (MAC) value on the basis of rights information, an encoded content key and key information obtained by encoding a key encoding key, and an authentication key in accordance with the specific identification information of the first terminal (TA), and including the calculated MAC value in the rights object.

9. An information terminal to be used as a second terminal (TB) in a system for transferring an encoded content and a rights object including rights information on the encoded content and encoding key information, the encoding key information being encoded based on specific identification information of a first terminal (TA), from the first terminal (TA) to the second terminal (TB), the information terminal **characterized by** comprising:
first acquisition means (13a) for acquiring the encoded content from the first terminal (TA);
second acquisition means (13a) for acquiring the rights object being encoded based on the specific identification information of the first terminal (TA) from the first terminal (TA);
third acquisition means(13a) for acquiring the specific identification information of the first terminal (TA) from the first terminal (TA) via a secure session; and
means (13a) for re-encoding the acquired encoded rights object on the basis of specific identification information of the second terminal(TB) after decoding the rights object based on the acquired specific identification information of the first terminal(TA).

10. The information terminal according to claim 9, **characterized in that**
the third acquisition means (13a) acquires a key encoding key calculated from the rights object encoded based on the specific identification information of the first terminal (TA), and
the re-encoding means (13a) generates the rights object re-encoded in accordance with the specific identification information of the second terminal (TB) on the basis of the acquired key encoding key and the rights object encoded based on the specific identification information of the first terminal (TA).

11. The information terminal according to claim 9, **characterized by** further comprising:
means (13c) for calculating a message authentication cord (MAC) value on the basis of rights information, an encoded content key and key information obtained by encoding a key encoding key thereof, and an authentication key in accordance with the specific identification information of the first terminal (TA), and including the calculated MAC value in the rights object.
